# EUROPEAN PATENT SPECIFICATION

(11) **EP 1 704 308 B1**
(45) Date of publication and mention of the grant of the patent: **11.04.2007**
(21) Application number: 04806043.8
(22) Date of filing: 14.12.2004
(51) Int. Cl.: F01N 3/023, F01N 3/035, F01N 3/28

(54) **EXHAUST SYSTEM FOR LEAN BURN ENGINE INCLUDING PARTICULATE FILTER**
ABGASSYSTEM MIT PARTIKELFILTER FÜR EINEN MAGERMOTOR
SYSTEME D'ECHAPPEMENT AVEC UN FILTRE A PARTICULES POUR MOTEUR A COMBUSTION INTERNE A MELANGE PAUVRE

(30) Priority: 16.12.2003 GB 0329095
(43) Date of publication of application: 27.09.2006
(73) Proprietor: Johnson Matthey Public Limited Company, London EC1N 8EE (GB)
(72) Inventor: CHIFFEY, Andrew Francis, Ware, Herts SG12 0AS (GB); PHILLIPS, Paul Richard, Bassingbourn, Royston SG8 5YR (GB)
(74) Representative: Nunn, Andrew Dominic
(86) International application number: PCT/GB2004/005225
(87) International publication number: WO 2005/059324

(56) References cited:
- EP-A- 1 312 776
- DE-U1- 8 790 076
- GB-A- 2 007 529
- US-A- 4 319 896
- US-A- 4 449 362
- US-A- 4 462 812
- US-A- 5 103 641

## Description

The present invention relates to an exhaust system for a lean burn internal combustion engine, and in particular it concerns such an exhaust system comprising a particulate filter.

Exhaust gases from lean burn internal combustion engines comprise particulate matter (PM). For example, it is well known that diesel engines emit particulates, especially upon start-up and under heavy load, which can be observed with the naked eye. Modern lean burn gasoline engines also emit large numbers of very small (<0.1 µm generally 10-100 nm) PM, which cannot be observed with the naked eye.

It is very well known that gas-borne particulates can cause health problems if inhaled. Concern about particulates has led to the introduction of various National European regulations to control the quantity of particulates emitted from diesel engines. Johnson Matthey has patented and commercially introduced a device called a CRT^{®} for diesel engines, particularly heavy-duty diesel engines ((as defined by the relevant European, US Federal or Californian legislation) see EP-B-341832 and US-A-4,902,487, the entire contents of which are incorporated herein by reference)) which has made available a self-regenerating diesel filter device.

The CRT^{®} device embodies a process whereby nitrogen monoxide (NO) in the exhaust gas is oxidised to nitrogen dioxide (NO₂) and PM on a filter is combusted in NO₂ at temperatures of up to 400°C.

It is also known to combust PM on a filter in oxygen. However, temperatures of up to about 600°C are desirable in order to effect significant combustion of PM to regenerate the filter. The combustion temperature in oxygen can be reduced somewhat by catalysing the filter.

A temperature rise in an exhaust gas in order to combust PM in oxygen can be effected passively: the backpressure in the exhaust system is increased as more PM is deposited on the filter. This, in turn, increases the load on the engine, leading to the required increase in exhaust gas temperature.

Alternatively, or in addition, active filter regeneration means can be employed to increase the exhaust gas temperature, e.g. fuel burners, electrical heaters, microwave heating or injection of combustibles into the exhaust gas alone or in conjunction with a warm-up catalyst, i.e. a catalyst for creating an exotherm.

Typically a particulate filter has a large open frontal area relative to the cross sectional area of a conduit for conveying the exhaust gas to the filter. In practice, the filter is disposed in a can or shell which is then mounted between an inlet and an outlet formed of the conduit. A diffuser section of a can or shell housing the filter or an inlet snorkel can be disposed between the inlet and the upstream face of the filter. From our investigations of diesel particulate filters we have observed that, despite the use of such diffusers, snorkels or the like, most of the exhaust gas will enter the filter at a point immediately opposite the inlet.

As PM is laid down in the region of the filter immediately opposite the inlet, the backpressure in this region of the filter increases and some PM is directed away from this region to more peripheral areas of the filter where the backpressure is less.

However, when a passive or active filter regeneration is triggered, hot gas initially contacts the region of the filter immediately opposite the inlet, triggering combustion of the PM in that region. As the filter region immediately opposite the inlet is cleaned of PM, the backpressure in the region is reduced with the result that even more exhaust gas flow tends to cross the filter in the region immediately opposite the inlet, and this cycle repeats itself.

This phenomenon leads to at least two significant problems. Firstly, there is incomplete use of expensive filter volume. This "expense" is not only the actual monetary cost of the filter material and associated canning, but also the "cost" in terms of the space the filter occupies on the vehicle. Vehicle design, particularly on light-duty diesel passenger vehicles, can restrict the space on a vehicle available to accommodate elements of an exhaust gas after-treatment system. This in turn can lead to the use of non-cylindrical filter shapes such as oval, "race-track" or asymmetric designs, which are not only more expensive to produce, but can exacerbate the flow distribution problem yet further.

Since only a fraction of the entire filter volume is ever used effectively for filtering PM, the capacity of the system as a whole is constrained and active regenerations are relatively more frequent, with a consequent fuel penalty.

Secondly, preferential combustion of PM in the region of the filter immediately opposite the inlet can cause thermal gradients to develop in the lateral plane leading to thermal stress in the filter material. Such thermal stresses can cause failure of the filter material e.g. for ceramic-type wall flow filters to crack.

This problem is compounded because certain filter materials are poor heat conductors e.g. cordierite and SiC (because a SiC filter is made up of a plurality of blocks separated by adhesive layers, which reduce thermal conductivity).

Moreover, it will be appreciated that a filter may never be adequately cleaned of PM, because PM deposited in peripheral filter regions are cooler than the region immediately opposite the inlet.

JP-A-61185310 discloses a porous cylindrical ceramic filter having a frusto-conical portion protruding from one end face of the cylindrical section. The arrangement enables the tip of the frusto-cone section rapidly to increase in temperature at regeneration so that PM combustion in the central region of the filter is propagated along the filter.

US-A-5, 103,641 discloses a flow guide disposed on the upstream side of a catalyst coated on a now-through monolith substrate. The flow guide body comprises a plurality of channels with an increasing cross section in the direction of flow.

US 4,449,362 discloses an exhaust system comprising a burn-off unit disposed within the exhaust passage upstream of a filter. The burn-off unit comprises a conduit leading to a frusto-conical section at its downstream end. The burn-off unit may contain a platinum catalyst.

We have now found that it is possible to remove or reduce one or more of these problems by providing means to deflect at least some exhaust gas flowing in an exhaust system away from entering a filter at a point immediately opposite an inlet.

According to one aspect, the invention provides an exhaust system for a lean burn internal combustion engine, which system comprising a particulate filter disposed between an inlet and an outlet and means for deflecting at least some exhaust gas flowing in the system away from entering the filter at a point immediately opposite the inlet.
wherein the deflecting means comprises a deflector disposed on the inlet side of the filter, which deflector comprising an upstream end having a first cross sectional area and a downstream end having a second cross sectional area, wherein the second cross sectional area > the first cross sectional area
, and wherein the deflector is in the shape of a cone or a frusto-cone, characterised in that the deflector comprises a flow through substrate comprising at least two channels which are parallel to one another, e.g. as in Corning's Contura^{™} substrate.

We appreciate that the use of a deflecting means may increase the temperature in the system at which the PM is combusted and/or prolong the regeneration time. However, this is a problem encountered in many exhaust systems, e.g. diesel systems using high rates of exhaust gas recirculation and known active regeneration techniques, such as those mentioned above can be used, as necessary.

The present invention is advantageous in a number of respects. Firstly, it can improve the efficiency of the filter to remove PM from the exhaust gas because more of the filter capacity is being used. This can enable smaller capacity filters to be used (because the efficiency of the system to filter PM is improved) or it can extend the period required between active regeneration events, thus decreasing fuel penalty.

A further advantage is that the invention can elicit more efficient active regeneration. This is because, not only can the deflecting means improve PM distribution across a filter, but it can also improve flow distribution of the heated exhaust gas across the filter. The more evenly distributed the exhaust gas flow, the more likely that the filter will be more evenly regenerated, i.e. both at a point immediately opposite the inlet and in the regions peripheral thereto.

Vehicle manufacturers are increasingly finding difficulty in accommodating filters on a vehicle, particularly in underfloor locations. As a result, and in extreme circumstances, non-circular cross-sectioned filters are being employed.

The ability to even the exhaust gas flow across a filter is particularly advantageous for filters that are non-circular in cross-section, where poorly uniform flow patterns across the filter can lead to incomplete use of expensive filter volume and possible thermal stresses across the filter volume. The facility to reduce filter volume is also a distinct advantage if there are capacity constraints.

Therefore, in an embodiment comprising the upstream deflector, the deflector is chosen to even the exhaust gas flow across a downstream non-circular cross sectioned filter. For example, the deflector cross section can be the same or a similar shape to the cross section of the filter.

In one embodiment, the cone or frusto-cone can be squashed in at least one dimension about a central, longitudinal axis and need not be symmetrical along any plane intersecting that central axis.

The deflector can be made of any suitable material. For example, it can be made from a ceramic, e.g. cordierite, or SiC. In one embodiment it is made from metal e.g. Fecralloy^{™} or steel or other materials with similar properties. Where the deflector is made from metal it can be made of thin metal foils, generally layers of corrugated metal foil sandwiched between flat metal foil and formed into honeycomb structures by coiling the layers together. The resulting array of channels is sinusoidal in cross-section because each channel is formed in part from the corrugated foil.

Where the deflector is catalysed, in one embodiment the catalyst is for oxidising NO in the exhaust gas to NO₂. Such catalysts are known and include an optionally supported, e.g. on alumina, at least one platinum group metal (PGM), e.g. platinum. In this arrangement, particulate on the filter downstream can be combusted in the NO₂ at temperatures of up to 400°C. Such a method is described in our EP-B-0341832, first mentioned above.

Exhaust gas flowing in an exhaust system will always try to take the path of least resistance, and typically this is to enter the filter at a point immediately opposite the inlet. In certain systems in which the filter is catalysed, it can be advantageous to improve combustion of PM away from the region immediately opposite the inlet by additional means. Such means can include, graduatedly increasing the catalyst loading from the region immediately opposite the inlet towards the periphery thereof and/or using low sulphur fuel e.g. fuel that produces exhaust gas having a sulfur content of less than 20 ppm, such as less than 10 or 5 ppm sulfur.

In a further embodiment applicable to both catalysed and non-catalysed filters, the pressure drop across the filter in the region immediately opposite the inlet can be increased by blocking the filter pores with a suitable washcoat, which can be the catalyst washcoat. In this embodiment, the pressure drop can be graduatedly increased in the lateral plane across the filter towards the region immediately opposite the inlet by increasing the washcoat loading, or fineness of the washcoat particles. In a further embodiment, an increased pressure drop can be provided by blocking at least one channel in the region at both ends, whereby an exhaust gas would need to cross two channel walls to reach an outlet.

In its simplest embodiments, the deflecting means consists essentially of: (i) a filter comprising a lateral washcoat gradient, whereby the backpressure in a region of the filter immediately opposite the inlet > backpressure in an area peripheral to said region; (ii) a lateral gradient of catalyst loading, whereby the catalyst loading in a region of the filter immediately opposite the inlet < catalyst loading in an area peripheral to said region; or (iii) both measures. However, in more complex embodiments, an upstream deflector is used in combination either with the lateral washcoat gradient or the lateral catalyst gradient loading, or all three features are combined in the same system.

Of course the inlet need not be positioned opposite the centre of the filter, nor necessarily need the filter be cylindrical. Where the filter is non-cylindrical, it can be oval or "racetrack" or any appropriate configuration.

According to a further embodiment, the filter is a wall-flow filter and can be made from cordierite or SiC, for example. Optionally, the filter can comprise a catalyst. Where the filter is catalysed, the catalyst can comprise an optionally supported, e.g. on alumina, at least one PGM, such as platinum.

According to a further aspect, the invention provides an internal combustion engine including an exhaust system according to the invention. The engine can be a diesel engine, for example a light- or heavy-duty diesel engine.

According to a further aspect, the invention provides a method of more evenly distributing particulate matter in a flowing exhaust gas across a particulate filter disposed in an exhaust system, which method comprising deflecting at least some exhaust gas flowing in the system away from entering the filter at a point immediately opposite the inlet wherein the deflecting means comprises a deflector disposed on the inlet side of the filter, which deflector comprising an upstream end having a first cross sectional area and a downstream end having a second cross sectional area wherein the second cross sectional area > the first cross sectional area, and wherein the deflector is in the shape of a cone or a frusto-cone, characterised in that the deflector comprises a flow through substrate comprising at least two channels which are parallel to one another.

In order that the invention may be more fully understood, embodiments thereof will be described by reference to the accompanying drawings in which:
Figure 1 is a schematic sectional view of an exhaust system including a filter and a deflector according to one embodiment according to the present invention;
Figure 2A is a schematic cut-away view of a second deflector embodiment for use in the present invention comprising a Coming Contura^{™} substrate;
Figures 2B, 2C are schematics of two Contura^{™} substrates, each substrate being disposed in a diffuser section having cone of different cone angles;
Figure 2D is an alternative substrate to Figures 2B and 2C comprising a dome shaped front face disposed in a diffuser section; and
Figure 3 is a schematic view of one example of a deflector as disclosed in US-A-5,103,641.

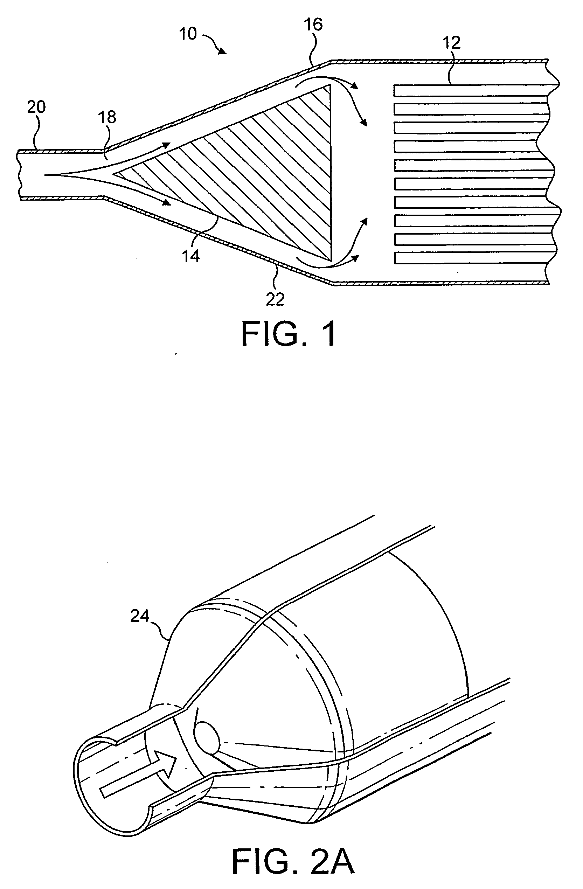

Figure 1 shows a schematic sectional view of an exhaust system (10) for a lean burn internal combustion engine, which exhaust system comprising a cordierite wall flow filter (12) of conventional construction. Such wall flow filters comprise a plurality of channels arranged in a honeycomb configuration wherein at each end of the filter block alternate channels are blocked, such that the arrangement of blocked and open channels at either end resembles a chess board.

A conical deflector (14) is disposed upstream of the filter, the arrangement being such that the narrow end of the cone is on the upstream side. The conical deflector (14) is made of a metal, such as Fecralloy^{™} or steel and presents a continuous surface for exhaust gas flowing in the exhaust system (10) to flow thereover.

The deflector (14) and filter (12) are housed in a steel shell or can (16) which includes an inlet (18) upstream of the deflector and an outlet (not shown) downstream of the filter. As is conventional in the art, the filter can be held in position and insulated from the shell using a mat disposed between an internal surface of the shell (16) and an external surface of the filter (12) (not shown). Conical deflector (14) is suspended from the internal surface of the frusto-conical section (22) of the shell (16) using elongate steel struts (not shown) each extending in the axial flow direction of the exhaust gas. Where two struts are used, each can be arranged opposite the other i.e. at 180°; where three struts are used, these may be arranged at 120° from each other; and where four struts are used, they can each be 90" from its immediate neighbours.

Inlet (18) is connected to a conduit (20) for conveying the exhaust gas from the engine and optionally via upstream processes for treating the exhaust gas.

In practice, exhaust gas flowing in conduit (20) is conveyed to inlet (18) where it contacts the tip of cone deflector (14) arranged along the central axis of the frusto-conical section (22) of the shell (16). The internal surface of the frusto-conical section of the shell (16) and the external surface of the cone deflector (14) are configured such that the gap therebetween is substantially uniform. The cone thus deflects the exhaust gas radially outwardly. As the exhaust gas reaches the trailing edge of the cone deflector (14), it is caused to flow inwardly behind the cone deflector (14) towards the lower pressure applied by positioning the cone deflector (14) in the flow path of the exhaust gas. This centrally directed flow causes turbulence which can in turn promote a desirable more even distribution of exhaust gas flow across the front face of the filter (12).

In a further embodiment, the surface of conical deflector (14) is discontinuous, i.e. it includes one or more apertures through which the exhaust gas can flow.

Figure 2A shows an alternative deflector which can be used in place of cone deflector (14) in Figure 1. It comprises the forward section of a Contura^{™} substrate, i.e. a flow-through monolith having a plurality of unblocked channels arranged in parallel. The Contura^{™} substrate includes a centrally arranged flat front face with a conical section extending toward the circumference of the outer substrate surface therebehind. In this embodiment, the frusto-conical section (22) of the shell (16) can be referred to as a diffuser (24). Diffusers of different configurations and their use are known in the art.

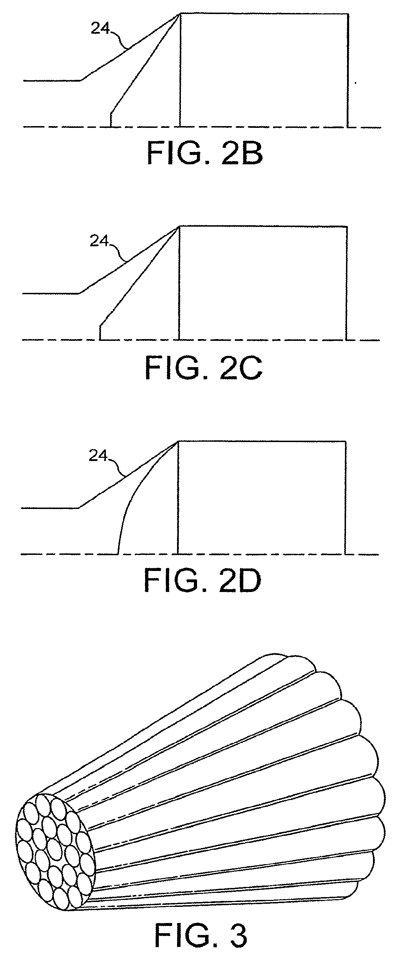

Figures 2B and 2C illustrate schematic sectional views of different Contura^{™} substrates having different cone angles and showing the arrangement of the substrate in diffuser (24). Figure 2D shows a schematic sectional view of an alternative substrate comprising a dome-shaped front face and is disposed in a diffuser, similarly to the Contura^{™} substrates shown in Figures 2B and 2C.

Figure 3 shows a prior art, deflector which comprises a plurality of frusto-conical tubes arranged made from metal, such as thin metal foils of Fecralloy^{™} and can be made by sandwiching layers of corrugated metal foil between flat metal foil and forming it into a honeycomb structure by coiling the layers together. The resulting array of channels is sinusoidal in cross-section because they are formed in part from the corrugated foil. In practice, this deflector can be disposed in e.g. a metal housing comprising an uninterrupted surface. Alternatively the deflector can be housed in a section of the can or shell.

A catalyst washcoat can be applied to the deflector such as platinum on a high surface alumina support using techniques known in the art. Such catalyst washcoat can be an appropriate platinum loading for promoting NO oxidation and in turn to promote combustion particulate matter on the filter in NO₂ at temperatures of up to 400 °C according to the process described in EP 0341832 mentioned above.

## Claims

1. An exhaust system (10) for a lean burn internal combustion engine, which system comprising a particulate filter (12) disposed between an inlet (18) and an outlet and means for deflecting at least some exhaust gas flowing in the system away from entering the filter at a point immediately opposite the inlet, wherein the deflecting means comprises a deflector (14) disposed on the inlet side of the filter, which deflector comprising an upstream end having a first cross sectional area and a downstream end having a second cross sectional area, wherein the second cross sectional area > the first cross sectional area, and wherein the deflector is in the shape of a cone or a frusto-cone, **characterised in that** the deflector comprises a flow through substrate comprising at least two channels which are parallel to one another.

2. A system according to claim 1, wherein the cone or frusto-cone is squashed in at least one dimension about a central, longitudinal axis.

3. A system according to claims 1 or 2, wherein the deflector is made of a metal.

4. A system according to any preceding claim, wherein the deflector comprises a catalyst, optionally.

5. A system according to claim 4, wherein the catalyst comprises an optionally supported at least one platinum group metal (PGM) preferably.

6. An exhaust system according to any preceding claim, wherein the deflecting means comprises a lateral washcoat gradient on the filter, whereby the backpressure in a region of the filter immediately opposite the inlet > backpressure in an area peripheral to said region.

7. An exhaust system according to any preceding claim, wherein the deflecting means comprises lateral gradient of catalyst loading on the filter, whereby the catalyst loading in a region of the filter immediately opposite the inlet < catalyst loading in an area peripheral to said region.

8. A system according to any preceding claim, wherein the inlet is immediately opposite the centre of the filter.

9. A system according to any preceding claim, wherein the filter is a wall-flow filter.

10. A system according to any preceding claim, wherein the shape of the deflector in cross-section is the same as, or similar to, the shape of the filter in cross-section.

11. A system according to any preceding claim, wherein the filter comprises a catalyst, optionally.

12. An internal combustion engine, optionally a diesel engine, including an exhaust system according to any preceding claim.

13. A method of more evenly distributing particulate matter in a flowing exhaust gas across a particulate filter (12) disposed in an exhaust system (10), which method comprising deflecting at least some exhaust gas flowing in the system away from entering the filter at a point immediately opposite an inlet (18) wherein the deflecting means comprises a deflector (14) disposed on the inlet side of the filter, which deflector comprising an upstream end having a first cross sectional area and a downstream end having a second cross sectional area, wherein the second cross sectional area > the first cross sectional area, and wherein the deflector is in the shape of a cone or a frusto-cone, **characterised in that** the deflector comprises a flow through substrate comprising at least two channels which are parallel to one another.

## Patentansprüche

1. Abgassystem (10) für einen Magerkraftstoffmotor, wobei dieses System umfasst einen Partikelfilter (12), der zwischen einem Einlass (18) und einem Auslass angeordnet ist, und ein Mittel zur Deflexion von wenigstens etwas Abgas, das in dem System vom Eintritt in den Filter an einem Punkt wegströmt, der dem Einlass (18) unmittelbar entgegengesetzt ist, worin das Deflexionsmittel einen Deflektor (14) umfasst, der auf der Einlassseite des Filters angeordnet ist, und der Deflektor ein Stromaufwärtsende mit einer ersten Querschnittsfläche und ein Stromabwärtsende mit einer zweiten Querschnittsfläche umfasst, wobei die zweite Querschnittsfläche > ist als die erste Querschnittsfläche und der Deflektor die Form eines Kegels oder eines Kegelstumpfes hat, **dadurch gekennzeichnet, dass** der Deflektor ein Durchströmungssubstrat enthält, das über wenigstens zwei parallel zueinander angeordnete Kanäle verfügt.

2. System nach Anspruch 1, worin der Kegel oder der Kegelstumpf in wenigstens einer Dimension um eine zentrale Längsachse gequetscht ist.

3. System nach Anspruch 1 oder 2, worin der Deflektor aus einem Metall gefertigt ist.

4. System nach einem der vorhergehenden Ansprüche, worin der Deflektor einen Katalysator, optional einen Katalysator zur Oxidation von NO im Abgas zu NO₂, umfasst.

5. System nach Anspruch 4, worin der Katalysator wenigstens ein Platingruppenmetall (PGM), optional auf einem Träger, umfasst, das vorzugsweise Platin ist.

6. Abgassystem nach einem der vorhergehenden Ansprüche, worin das Deflexionsmittel einen lateralen Washcoatgradienten auf dem Filter umfasst, wobei der Rückdruck in einer Region des Filters unmittelbar entgegensetzt zum Einlass > ist als der Rückdruck in einer zu dieser Region peripheren Fläche ist.

7. Abgassystem nach einem der vorhergehenden Ansprüche, worin das Deflexionsmittel einen lateralen Gradienten der Katalysatorbeladung auf dem Filter umfasst, wobei die Katalysatorbeladung in einer Region des Filters unmittelbar entgegengesetzt zum Einlass ist als die Katalysatorbeladung in einem zu dieser Region peripheren Fläche ist.

8. System nach einem der vorhergehenden Ansprüche, worin der Einlass (18) unmittelbar entgegengesetzt zum Zentrum des Filters angeordnet ist.

9. System nach einem der vorhergehenden Ansprüche, worin der Filter ein Wandströmungsfilter ist.

10. System nach einem der vorhergehenden Ansprüche, worin die Querschnittsform des Deflektors gleich oder ähnlich ist zur Querschnittsform des Filters.

11. System nach einem der vorhergehenden Ansprüche, worin der Filter einen Katalysator umfasst, der optional wenigstens ein PGM enthält.

12. Magerkraftstoffmotor, vorzugsweise ein Dieselmotor, der ein Abgassystem nach einem der vorhergehenden Ansprüche einschließt.

13. Verfahren zur gleichförmigeren Verteilung eines Partikelmaterials in einem Abgas, das über einen Partikelfilter (12) strömt, der in einem Abgassystem (10) angeordnet ist, durch Deflexion von wenigstens etwas Abgas, das in dem System vom Eintritt in den Filter an einem Punkt wegströmt, der dem Einlass (18) unmittelbar entgegengesetzt ist, worin das Deflexionsmittel einen Deflektor (14) umfasst, der auf der Einlassseite des Filters angeordnet ist, und der Deflektor ein Stromaufwärtsende mit einer ersten Querschnittsfläche und ein Stromabwärtsende mit einer zweiten Querschnittsfläche umfasst, wobei die zweite Querschnittsfläche > ist als die erste Querschnittsfläche und der Deflektor die Form eines Kegels oder eines Kegelstumpfes hat, **dadurch gekennzeichnet, dass** der Deflektor ein Durchströmungssubstrat enthält, das über wenigstens zwei parallel zueinander angeordnete Kanäle verfügt.

## Revendications

1. Système d'échappement (10) pour un moteur à combustion interne à mélange pauvre, ce système comprenant un filtre à particules (12) disposé entre une entrée (18) et une sortie et un moyen pour dévier au moins une certaine partie du gaz d'échappement s'écoulant dans le système pour l'empêcher d'entrer dans le filtre à un point immédiatement opposé à l'entrée, dans lequel le moyen de déviation comprend un déflecteur (14) disposé du côté de l'entrée du filtre, ce déflecteur comprenant une extrémité en amont ayant une première section et une extrémité en aval ayant une seconde section, dans lequel la seconde section > la première section, et dans lequel le déflecteur est sous la forme d'un cône ou d'un tronc de cône, **caractérisé en ce que** le déflecteur comprend un substrat à écoulement direct comprenant au moins deux canaux qui sont parallèles l'un à l'autre.

2. Système selon la revendication 1, dans lequel le cône ou le tronc de cône est écrasé dans au moins une dimension autour d'un axe central longitudinal.

3. Système selon les revendications 1 ou 2, dans lequel le déflecteur est réalisé à partir d'un métal.

4. Système selon l'une quelconque des revendications précédentes, dans lequel le déflecteur comprend un catalyseur, optionnellement un catalyseur pour oxyder le NO dans le gaz d'échappement en NO₂.

5. Système selon la revendication 4, dans lequel le catalyseur comprend au moins un métal du groupe du platine (PGM) supporté optionnellement, de préférence du platine.

6. Système d'échappement selon l'une quelconque des revendications précédentes, dans lequel le moyen de déviation comprend un gradient latéral d'encollage sur le filtre, moyennant quoi la contre-pression dans une région du filtre immédiatement opposée à l'entrée > la contre-pression dans une zone périphérique à ladite région.

7. Système d'échappement selon l'une quelconque des revendications précédentes, dans lequel le moyen de déviation comprend un gradient latéral de charge de catalyseur sur le filtre, moyennant quoi la charge de catalyseur dans une région du filtre immédiatement opposée à l'entrée < la charge de catalyseur dans une zone périphérique à ladite région.

8. Système selon l'une quelconque des revendications précédentes, dans lequel l'entrée est immédiatement opposée au centre du filtre.

9. Système selon l'une quelconque des revendications précédentes, dans lequel le filtre est un filtre à écoulement de paroi.

10. Système selon l'une quelconque des revendications précédentes, dans lequel la forme de la section transversale du déflecteur est identique à la forme de la section transversale du filtre, ou similaire à celle-ci.

11. Système selon l'une quelconque des revendications précédentes, dans lequel le filtre comprend un catalyseur, comprenant optionnellement au moins un PGM.

12. Moteur à combustion interne, optionnellement un moteur diesel, comprenant un système d'échappement selon l'une quelconque des revendications précédentes.

13. Procédé de distribution plus uniforme des particules dans un gaz d'échappement s'écoulant à travers un filtre à particules (12) disposé dans un système d'échappement (10), ce procédé comprenant la déviation d'au moins une certaine partie du gaz d'échappement s'écoulant dans le système pour l'empêcher d'entrer dans le filtre à un point immédiatement opposé à une entrée (18), dans lequel le moyen de déviation comprend un déflecteur (14) disposé du côté de l'entrée du filtre, ce déflecteur comprenant une extrémité en amont ayant une première section et une extrémité en aval ayant une seconde section, dans lequel la seconde section > la première section, et dans lequel le déflecteur est sous la forme d'un cône ou d'un tronc de cône, **caractérisé en ce que** le déflecteur comprend un substrat à écoulement direct comprenant au moins deux canaux qui sont parallèles l'un à l'autre.
